# FASCICULE DE BREVET EUROPEEN

(11) **EP 4 206 494 B1**
(45) Date de publication et mention de la délivrance du brevet: **05.11.2025**
(21) Numéro de dépôt: 22217244.7
(22) Date de dépôt: 30.12.2022
(51) Int. Cl.: F16H 55/17

(54) **ROUE DENTÉE - ENSEMBLE COMPORTANT UNE TELLE ROUE DENTÉE - PROCÉDÉ DE FABRICATION**
ZAHNRAD - ZAHNRADANORDNUNG MIT EINEM SOLCHEN ZAHNRAD. VERFAHREN ZUR HERSTELLUNG
GEAR WHEEL - GEAR ASSEMBLY COMPRISING SUCH A GEAR WHEEL - METHOD OF MANUFACTURING

(30) Priorité: 31.12.2021 FR 2114729; 31.12.2021 FR 2114731
(43) Date de publication de la demande: 05.07.2023
(73) Titulaire: VALEO EMBRAYAGES, 80009 Amiens (FR)
(72) Inventeur: MAUREL, Herve, 95892 CERGY PONTOISE (FR); VERHOOG, Roël, 95892 CERGY PONTOISE (FR); MAHE, Herve, 95892 CERGY PONTOISE (FR); MAGNE, Stephan, REDDITCH (GB)
(74) Mandataire: Valeo Powertrain Systems

(56) Documents cités:
- EP-A1- 3 187 323
- EP-A2- 1 382 874
- DE-A1- 102005 018 143
- DE-A1- 102006 012 861
- DE-U1- 20 215 431
- US-A- 6 070 484
- US-A1- 2002 029 649
- US-A1- 2004 043 100
- US-A1- 2021 285 531

## Description

### Procédé de fabrication

Le domaine de la présente invention est celui de la transmission pour les engins de mobilité en particulier les engins de mobilité comportant un moteur électrique et au moins une roue. La présente invention s'intéresse en particulier aux véhicules automobiles.

De tels engins de mobilité comportent de façon connue un réducteur avec plusieurs roues dentées. Il est également connu que ce réducteur est générateur de bruit, en particulier à la fréquence de résonnance.

Il est connu que la fréquence de résonance des roues dentées est une caractéristique essentielle pour la bruyance des transmissions pour engin de mobilité électrique. Les roues dentées doivent être suffisamment raides pour ne pas avoir à fonctionner à la résonance. Il existe un besoin pour trouver un compromis entre la masse du réducteur et la raideur des roues dentées.

Une rue dentée d'axe est connue, par exemple, de US 2004/043100 A1.

Les vibrations générées lors de l'utilisation du réducteur peuvent provoquer une déformation des roues dentée à certaines fréquences. Les roues dentées comporte classiquement un voile pour relier une denture à un moyeu de fixation de la roue sur l'arbre. Ces déformations dépendent de la géométrie de la denture et de la position du voile par rapport au moyeu. Il existe un besoin pour améliorer la géométrie de la roue dentée et ainsi anticiper le risque de déformation.

Pour répondre à tout ou partie de ces besoins, l'invention selon un premier aspect a pour objet une roue dentée destinée à être montée sur un arbre, ladite roue dentée comportant une bande d'engrènement, reliée par un voile à un moyeu, ladite roue dentée étant caractérisée en ce qu'elle comporte au moins un relief s'étendant dans la direction de son axe et fixé par soudure au voile et/ou à la bande d'engrènement.

Le relief selon l'invention s'étend notamment d'une part autour de l'axe de la roue, d'autre part axialement.

Avantageusement selon l'invention le relief s'étend dans la direction de l'axe de la roue ce qui permet au relief d'avoir une certaine flexibilité par rapport au voile. Le relief, aux différentes fréquences d'utilisation de la roue dentée, peut ainsi vibrer ou être déformé indépendamment des effets vibratoires sur la bande d'engrènement ou le voile.

De préférence le voile et la bande d'engrènement sont monoblocs et venus de matière simultanément par exemple par forgeage, pressage ou moulage.

Selon les modes de réalisation, la roue dentée selon l'invention peut présenter de façon alternative ou complémentaire une des caractéristiques suivantes, selon les revendications annexées :
- le au moins un relief est relié à un coté du voile,
- le au moins un relief est fixé à un coté du voile, autrement dit dans le cadre de l'invention il est soudé, directement ou non, à un coté du voile.
- le au moins un relief est relié à une périphérie intérieure de la bande d'engrènement
- le au moins un relief est fixé à une périphérie intérieure de la bande d'engrènement
- le relief présente une forme annulaire, fermée ou non. Le relief peut être cylindrique ou non.
- la roue dentée comporte un seul relief,
- la roue dentée comporte plusieurs reliefs, notamment en nombre impair, en particulier trois, cinq ou sept reliefs. Ceux-ci sont par exemple angulairement répartis régulièrement autour de l'axe de la roue.
- la roue dentée comporte au moins une zone de fixation entre le relief et le voile ou entre le relief et la bande d'engrènement, notamment un nombre impair de zone de fixation. La roue dentée peut comporter plusieurs zones de fixation angulairement répartis de façon irrégulière autour de l'axe de la roue. Le plus grand écart angulaire entre deux zones de fixation successives est par exemple au moins deux fois plus grand, voire plus de trois fois supérieur au plus petit écart angulaire entre deux zones de fixation successives. L'écart angulaire entre deux zones de fixation successives est notamment compris entre 10° et 200°, voire entre 20° et 180°, en particulier entre 25° et 150°. Dans une variante les zones de fixation sont angulairement répartis régulièrement autour de l'axe.
- la roue dentée comporte au moins une zone de liaison entre le relief et le voile ou entre le relief et la bande d'engrènement, notamment un nombre impair de zone de liaison. La roue dentée peut comporter plusieurs zones de liaison angulairement répartis de façon irrégulière autour de l'axe de la roue. Le plus grand écart angulaire entre deux zones de liaison successives est par exemple au moins deux fois plus grand, voire plus de trois fois supérieur au plus petit écart angulaire entre deux zones de liaison successives. L'écart angulaire entre deux zones de liaison successives est notamment compris entre 10° et 200, voire entre 20° et 180°, en particulier entre 25° et 150°. Dans une variante les zones de liaison sont angulairement répartis régulièrement autour de l'axe.
- la roue dentée comporte au moins une gorge délimitée en partie par le relief. La gorge est par exemple située entre le relief et le voile. Dans une variante, la gorge est intérieure au voile. La gorge peut être continue ou non. Dans une variante où la gorge est discontinue, elle peut comporter plusieurs portions, par exemple chacune située entre deux zones de fixation successives. La roue dentée peut comporter au moins une première gorge, en particulier située du même côté de la roue dentée que le voile. La première gorge est par exemple située à une périphérie intérieure de la bande d'engrènement. Elle peut être délimitée par la bande d'engrènement et le relief de la roue dentée. Dans un autre exemple la première gorge est située entre le relief et le moyeu. La roue dentée peut comporter une deuxième gorge, notamment située dans le voile. La deuxième gorge peut être traversante ou non.
- le au moins un relief présente en coupe un profil variable autour de l'axe de la roue. Le relief peut présenter une section transversale variable autour de l'axe de la roue. En particulier, la hauteur selon l'axe de la roue d'une section radiale du relief varie selon la position angulaire de ladite section par rapport à l'axe de la roue.
- en coupe radiale le relief peut présenter une forme polygonale , rectangulaire, oblongue ou une forme en « i », en « h » ou en « u ».
- la roue dentée comporte un élément amortissant entre le relief et le voile,
- la roue dentée comporte un élément amortissant entre le relief et la bande d'engrènement.
- le relief a une fréquence de résonance qui lui est propre. La fréquence de résonance du relief se mesure par exemple en le fixant sur un support de raideur infinie. La fréquence de résonance du relief peut ainsi être choisie de manière adéquate en fonction de la fréquence de résonance du voile et/ou de la fréquence de résonance de la bande d'engrènement pour en diminuer les effets vibratoires.
- la roue dentée présente une raideur globale, elle comporte au moins un élément poutre de raideur locale distincte de ladite raideur globale. Au moins un élément poutre peut former le au moins un relief.
- le voile est plein
- le voile comporte au moins une ouverture, par exemple entre une et dix ouvertures, par exemple six, sept, huit ou neuf.
- la denture est droite
- la denture est hélicoïdale

Selon un autre de ses aspects, l'invention a pour objet un ensemble d'engrenage comportant une roue dentée telle que précédemment décrite et un arbre solidaire en rotation avec la roue dentée.

L'arbre est par exemple l'arbre d'un moteur électrique destiné à équiper un engin de mobilité.

L'engin de mobilité peut être un véhicule automobile en particulier à propulsion électrique ou hybride. Ce peut être un véhicule industriel ou de chantier. L'engin de mobilité peut être un engin autonome ou non. Ce peut être un engin de mobilité dite légère à une ou plusieurs roues tel un vélo à assistance électrique ou un tricycle.

Selon un mode de réalisation de l'ensemble d'engrenage la roue dentée et l'arbre sont monobloc. Autrement dit ils sont venus de matière notamment par pressage, forgeage ou moulage.

Dans un autre mode de réalisation la roue dentée est emmanchée à force sur l'arbre.

Selon encore un autre de ses aspects, l'invention a pour objet un procédé de fabrication d'une roue dentée pour engin de mobilité comportant une étape de fabrication d'une ébauche, ladite ébauche comportant une bande d'engrènement, reliée par un voile à un moyeu et au moins un relief venu de matière avec le voile et/ou la bande d'engrènement.

L'ébauche est par exemple réalisée par forgeage, moulage ou pressage, frittage, impression 3D ou tout autre méthode connue de l'homme du métier.

Le procédé de fabrication peut comporter une étape de suppression de matière par usinage notamment par tournage, fraisage, perçage, rectification, afin de créer une gorge dans l'ébauche. Le procédé selon l'invention peut ainsi dégager au moins un élément poutre de la roue dentée. Par un « élément poutre » on entend ici une partie de l'ébauche de raideur locale distincte la raideur globale de l'ébauche. Au moins un élément poutre peut former le au moins un relief de la roue dentée.

Le procédé de fabrication peut comporter une étape préalable de détermination de la fréquence de résonance du relief. Celle-ci se mesure par exemple en le fixant sur un support de raideur infinie. La fréquence de résonance de ce relief peut ainsi être choisie de manière adéquate en fonction de la fréquence de résonance du voile et de la bande d'engrènement pour en diminuer les effets vibratoires.

D'autres caractéristiques, détails et avantages de l'invention ressortiront plus clairement à la lecture de la description donnée ci-après à titre indicatif en relation avec des dessins dans lesquels :
- les figures 1a et 1b sont des vues isométrique et en coupe d'un premier mode de réalisation d'une roue dentée selon l'invention,
- la figure 1c est une vue similaire à la figure 1b pour une variante du premier mode de réalisation d'une roue dentée selon l'invention,
- les figures 2a et 2b sont des vues isométrique et en coupe d'un autre mode de réalisation d'une roue dentée selon l'invention,
- la figure 3a illustre une autre variante d'une roue dentée selon l'invention,
- la figure 3b est une vue d'un détail IIIb de la Figure 3a,
- les figures 4a à 4c illustrent en coupe le relief d'une roue dentée selon différentes variantes,
- la figure 5 illustre une autre variante d'une roue dentée selon l'invention,
- la figure 6 représente un ensemble d'engrenage selon le deuxième aspect de l'invention,
- les figures 7a et 7b sont des vues isométriques et en coupe d'un deuxième mode de réalisation d'une roue dentée selon l'invention,
- la figure 7c représente une ébauche utilisé dans un procédé selon l'invention pour la fabrication de la roue dentée des figures 7a et 7b,
- la figure 7d est une vue en coupe illustrant une étape de procédé selon l'invention à partir de l'ébauche de la figure 7c,
- la figure 7e est une vue similaire à la figure 7b pour une variante du deuxième mode de réalisation d'une roue dentée selon l'invention,
- les figures 8a à 8c correspondent aux figures 7a à 7c pour un troisième mode de réalisation d'une roue dentée selon l'invention,
- les figures 8d à 8h sont des vues en coupe illustrant une étape de procédé selon l'invention à partir de l'ébauche de la figure 8c,
- les figures 8i à 8k illustrent deux variantes du troisième mode de réalisation d'une roue dentée selon l'invention,
- les figures 9a et 9b sont des vues isométrique et en coupe d'un quatrième mode de réalisation d'une roue dentée selon l'invention,
- les figures 10a à 10c illustrent en coupe le relief d'une roue dentée selon différentes variantes de l'invention
- la figure **11** illustre une autre variante de d'une roue dentée selon l'invention et
- la figure 12 représente un ensemble d'engrenage selon le deuxième aspect de l'invention.

Sur les figures, les éléments communs à plusieurs modes de réalisation conservent la même référence.

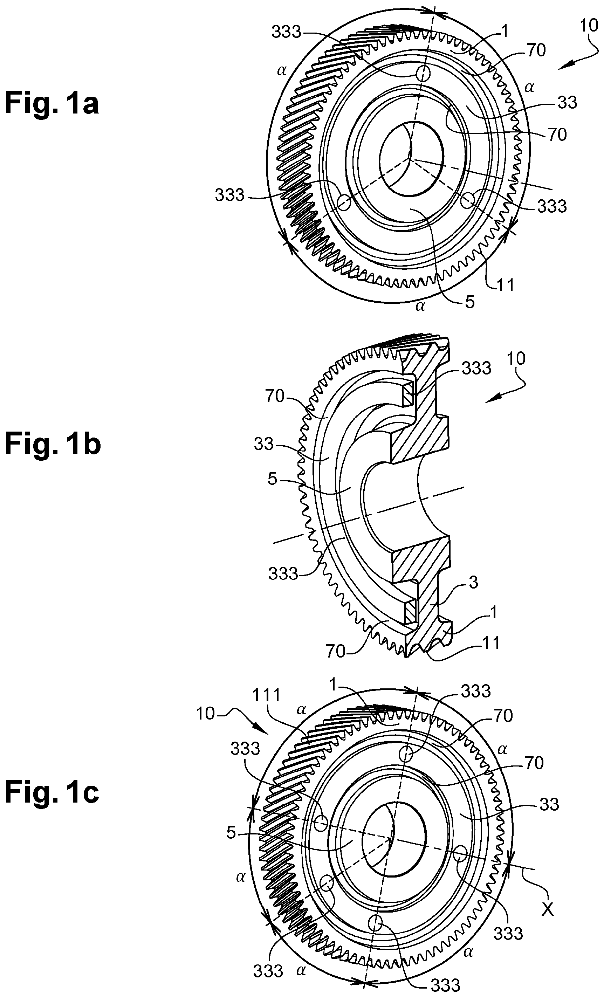

La roue dentée 10 d'axe X illustrée figures 1a et 1b comporte une bande d'engrènement 1 reliée par un voile 3 à un moyeu 5 et un relief 33 s'étendant dans la direction de l'axe X de la roue dentée. Le relief 33 présente ici une forme annulaire fermée d'axe X. Il est fixé au voile 3 par soudure au niveau de trois zones de fixation 333 angulairement répartis régulièrement autour de l'axe X. Dans l'exemple illustré, deux zones de fixation 333 sont ainsi séparées par un angle α de 120°.

La roue dentée 10 comporte d'un premier côté deux premières gorges 70. L'une des premières gorges 70 est située entre la bande d'engrènement 1 et le relief 33. L'autre première gorge 70 est située entre le relief 33 et le moyeu 5. Les premières gorges 70 sont continues. Elles sont ici adjacentes, autrement dit elles sont reliées l'une à l'autre au niveau de l'espace entre le relief 33 et le voile 3.

La bande d'engrènement 1 comporte une denture **11,** sur la périphérie extérieure de la roue dentée.

La roue dentée 10 présente une raideur globale, le relief 33 ici est formé d'un élément poutre de raideur locale distincte de ladite raideur globale.

Dans les autres modes de réalisation représentés une même référence est utilisé pour des éléments analogues. Les éléments de description déjà expliqués ne sont pas repris systématiquement, seules les particularités des différents exemples sont détaillées.

La roue dentée 10 représentée sur la figure 1c comporte cinq zones de fixation 333. Celles-ci ne sont pas réparties régulièrement autour de l'axe X. Le plus petit écart angulaire entre deux zones de fixation 333 successives est dans l'exemple illustré égal à 30°. Le plus grand écart angulaire entre deux zones de fixation 333 successives, égale à 100°, il est ainsi plus de trois fois supérieur au plus petit écart angulaire entre deux zones de fixation 333 successives. Deux zones de fixation 333 successives sont ici séparées par un angle α de 30°, respectivement de 90°, 100°, 80° et 60°.

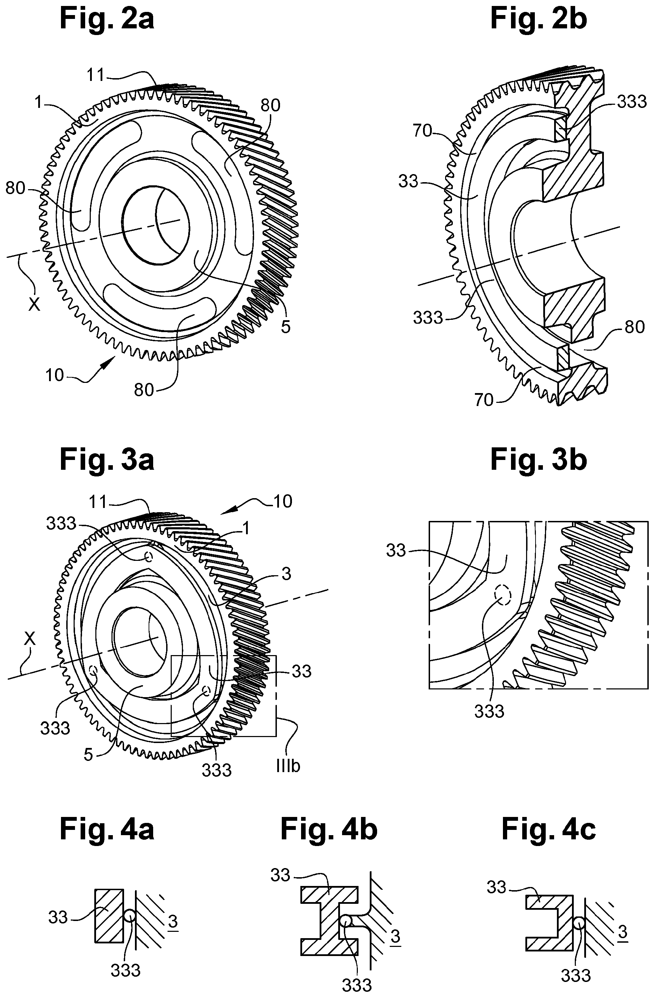

L'exemple de roue dentée 10 illustré aux Figures 2a et 2bcomporte en outre une deuxième gorge 80 à l'intérieur du voile 3. La deuxième gorge 80 est discontinue comme le montre la figure 2a ; elle comporte ici trois portions, chacune située entre deux zones de fixation 333.

Dans l'exemple illustré la deuxième gorge 80 traverse le voile 3.

La figure 3a montre un autre mode de réalisation d'une roue dentée 10. Dans cet exemple le relief 33 présente une forme fermée formée de trois arcs de cercle 331. La roue dentée 10 comporte une première gorge 70 continue délimitée par la bande d'engrènement 1et le relief 33. La roue dentée 10 comporte en outre une deuxième gorge 80 continue non visible sur la figure.

Dans une autre variante non illustrée, correspondant au premier mode de réalisation, le relief présente également une forme fermée comportant plusieurs parties en forme de segments de droite ou en forme d'arc de cercle. Le relief est relié à une périphérie intérieure de la bande d'engrènement par des zones de liaison, en particulier en nombre impair. Les zones de liaison sont par exemple situées au milieu des portions en en forme de segments de droite ou en forme d'arcs de cercle. Dans différentes variantes les zones de liaison sont situées à l'intersection de deux parties en forme de segments de droite ou en forme d'arc de cercle. Les zones de liaison sont par exemple angulairement réparties de façon régulière autour de l'axe X.

L'invention n'est pas limitée à un profil particulier du relief 33. En coupe radiale le relief 33 peut présenter une forme polynomiale, rectangulaire, oblongue. Les figures 4a à 4c illustrent en coupe un profil en « i », en « h », en « u » selon de variantes de relief 33 d'une roue dentée 10.

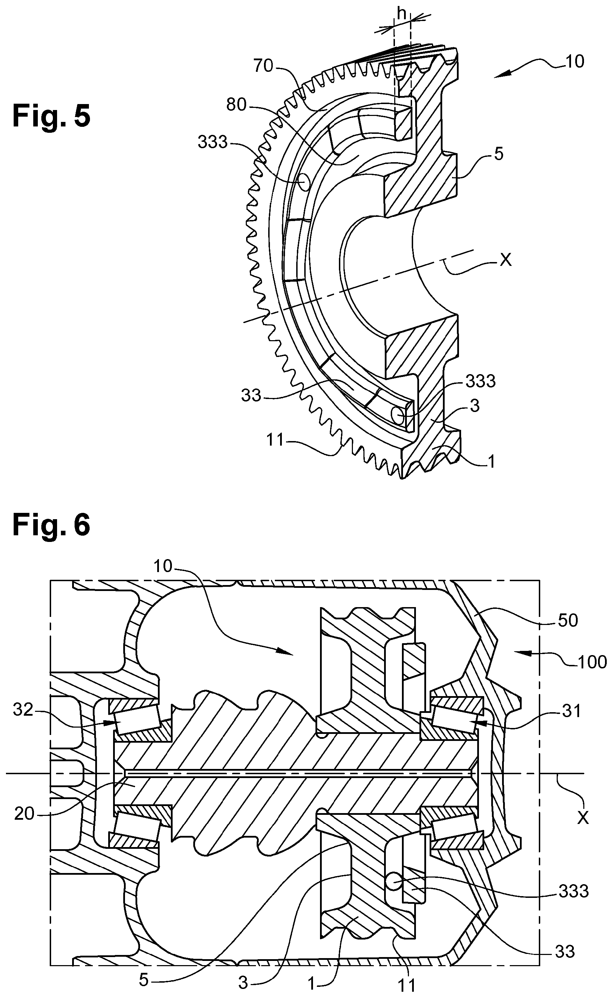

La Figure 5 illustre une roue dentée 10 comportant un relief 33 s'étendant autour de l'axe X et axialement d'une hauteur h. Le relief 33 est fixé par soudure sur un coté du voile 3. La roue dentée 10 comporte au moins une zone de fixation 333 entre le relief 33 et le voile 3 comme le montre la figure. Le relief 33 présente ici une section transversale variable autour de l'axe X. La hauteur h selon l'axe X d'une section du relief 33 varie selon la position angulaire de ladite section par rapport à l'axe X.

L'ensemble d'engrenage 100 de la Figure 6 comporte une roue dentée 10 et un arbre 20, solidaires en rotation. La roue dentée 10 est ici emmanchée à force sur l'arbre 20. Selon un autre mode de réalisation non illustré, la roue dentée et l'arbre sont monoblocs. L'arbre 20 ici est supporté par un premier et un deuxième roulements 31 et 32.

La roue dentée 10 comporte un relief 33 s'étendant autour de l'axe X ainsi que dans la direction de l'axe X. Le relief 33 est ici fixé par soudure au voile 3. La figure 6 montre une des zones de fixation 333 entre le relief 33 et le voile 3.

L'exemple illustré montre également un carter 50 de l'ensemble d'engrenage.

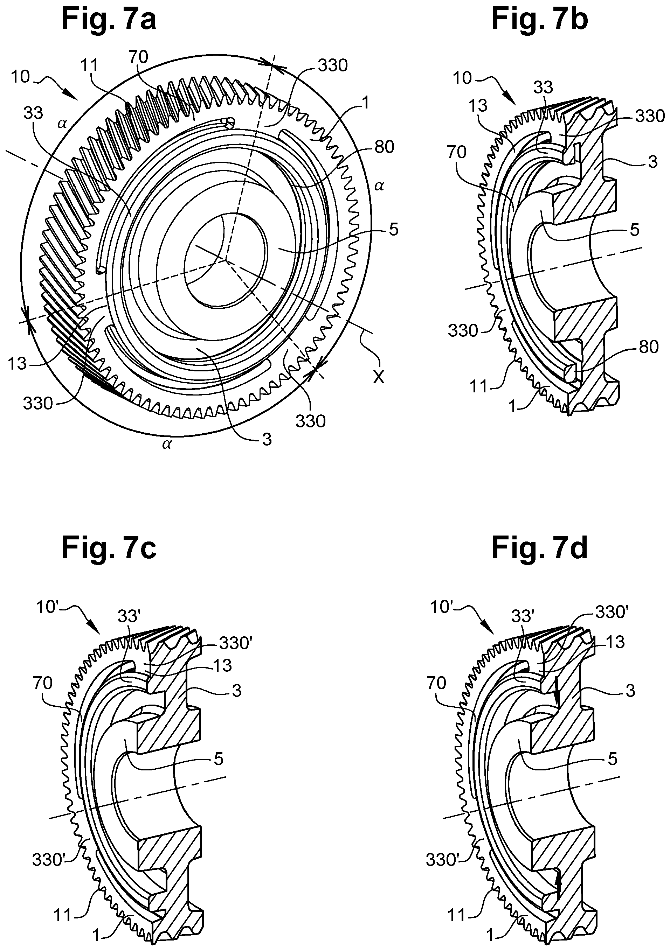

La roue dentée 10 d'axe X illustrée figures 7a et 7b comporte une bande d'engrènement 1 reliée par un voile 3 à un moyeu 5 et un relief 33 s'étendant dans la direction de l'axe X de la roue dentée. Le relief 33 présente ici une forme annulaire fermée d'axe X. Il est relié à une périphérie intérieure 13 de la bande d'engrènement 1 par trois zones de liaison 330 angulairement répartis régulièrement autour de l'axe X. Dans l'exemple illustré, deux zones de liaison 330 sont ainsi séparées par un angle α de 120°.

La roue dentée 10 comporte une première gorge 70 située à une périphérie intérieure de la bande d'engrènement 1. La première gorge 70 est délimitée par la bande d'engrènement 1 et le relief 33. La première gorge 70 est discontinue, elle comporte trois portions chacune située entre deux zones de liaison 330.

La roue dentée 10 comporte en outre une deuxième gorge 80 entre le relief 33 et le voile 3. La deuxième gorge 80 est continue.

Dans l'exemple illustré les zones de liaison 330 de la roue dentée 10 relient la bande d'engrènement 1, le voile 3 et le relief 33.

Dans une variante non illustrée les zones de liaison 330 de la roue dentée 10 sont séparées du voile par la deuxième gorge 80.

La bande d'engrènement 1 comporte une denture **11,** sur la périphérie extérieure de la roue dentée.

La roue dentée 10 présente une raideur globale, elle comporte un élément poutre de raideur locale distincte de ladite raideur globale. L'élément poutre forme le relief 33.

Dans les autres modes de réalisation représentés une même référence est utilisé pour des éléments analogues. Les éléments de description déjà expliqués ne sont pas repris systématiquement, seules les particularités des différents exemples sont détaillées.

La mise en œuvre d'un procédé selon l'invention comporte une étape de fabrication d'une ébauche 10' d'axe X telle qu'illustrée en coupe sur la Figure 7c. L'ébauche 10' d'une roue dentée comporte une bande d'engrènement 1 reliée par un voile 3 à un moyeu 5 et un relief 33' de forme annulaire venu de matière avec le voile et la bande d'engrènement. Le relief 33' s'étend à partir du voile 3 dans la direction de l'axe X. Le relief 33' est en outre relié à une périphérie intérieure 13 de la bande d'engrènement 1 par trois zones de liaison 330' angulairement répartis régulièrement autour de l'axe (X). Les zones de liaison 330' de l'ébauche 10' relient la bande d'engrènement 1, le voile 3 et le relief 33'.

Pour fabriquer la roue dentée des figures 7a et 7b par un procédé selon l'invention on fabrique une ébauche 10' représentée en coupe isométrique sur la figure 7c. L'ébauche 10' comporte une première gorge 70 située à une périphérie intérieure de la bande d'engrènement 1. La première gorge 70 est délimitée par la bande d'engrènement 1 et le relief 33'. La première gorge 70 est ici discontinue, elle comporte trois portions chacune située entre deux zones de liaison 330'.

A partir de l'ébauche 10', une étape de tournage permet par suppression de matière illustrée par les flèches de la Figure 7d, de créer une deuxième gorge 80 dans l'ébauche et ainsi d'obtenir la roue dentée 10. La deuxième gorge 80 est continue. La suppression de matière de l'ébauche 10' crée la deuxième gorge 80 et ainsi dégager un élément poutre formant le relief 33 de la roue dentée 10.

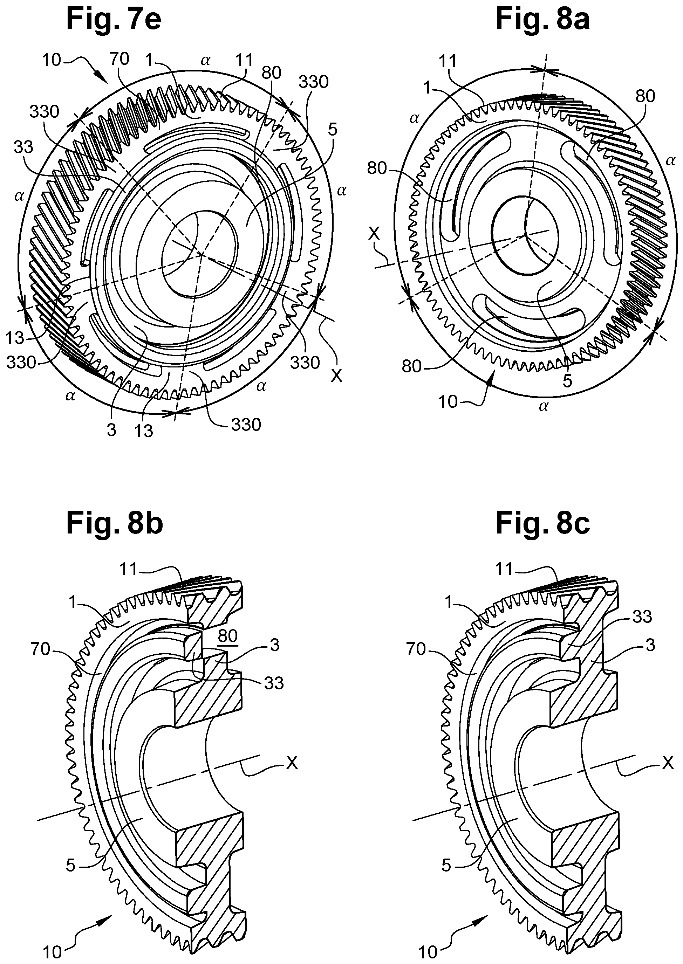

La roue dentée 10 représentée sur la figure 7e comporte cinq zones de liaison 330. Celles-ci ne sont pas réparties régulièrement autour de l'axe X. Le plus petit écart angulaire entre deux zones de liaison successives est dans l'exemple illustré égal à 30°. Le plus grand écart angulaire entre deux zones de liaison successives, égale à 100°, lui est plus de trois fois supérieur. Deux zones de liaison 330 successives sont ici séparées par un angle α de 30°, respectivement de 90°, 100°, 80° et 60°.

Dans l'exemple de réalisation illustré en coupe isométrique figure 8b, la roue dentée 10 comporte un relief 33 s'étendant dans la direction de l'axe X et venu de matière avec le voile 3 et la bande d'engrènement 1.

Le relief 33 est relié à un coté du voile 3. Sur ce même côté du voile 3, la roue dentée 10 comporte deux premières gorges 70, circulaires et continues. Une des premières gorges 70 est située à une périphérie intérieure 13 de la bande d'engrènement 1, elle est délimitée par la bande d'engrènement 1 et le relief 33. L'autre première gorge 70 est située entre le relief 33 et le moyeu 5.

La roue dentée 10 comporte en outre une deuxième gorge 80 située dans le voile 3. La deuxième gorge 80 est discontinue comme le montre la figure 2a. Elle comporte trois portions chacune située entre deux zones de liaison 330.

Dans l'exemple illustré la deuxième gorge 80 traverse le voile 3 et le relief 33. Le relief 33 est relié au voile au niveau de trois zones de liaison 330 de la roue dentée 10.

L'ébauche 10' d'axe X illustrée en coupe sur la Figure 8c correspond à une étape d'un procédé selon l'invention. L'ébauche 10' comporte une bande d'engrènement 1 reliée par un voile 3 à un moyeu 5 et un relief 33' de forme annulaire venu de matière avec le voile et la bande d'engrènement. Le relief 33' s'étend à partir du voile 3 dans la direction de l'axe X. L'ébauche 10' comporte une première gorge 70 située à une périphérie intérieure de la bande d'engrènement 1. La première gorge 70 est ici continue. Elle est délimitée par la bande d'engrènement 1 et le relief 33'.

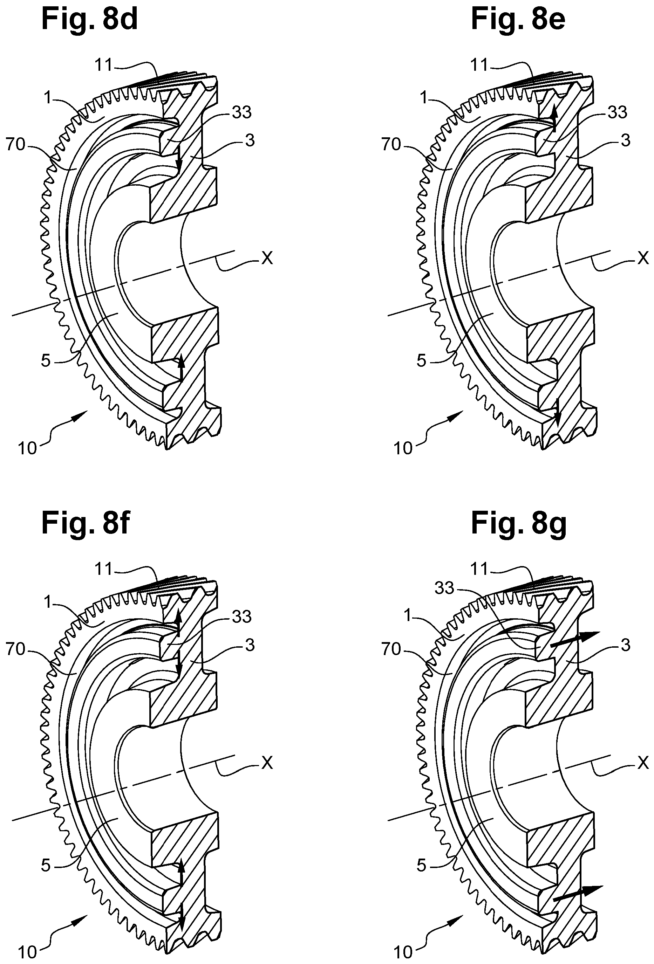

A partir de l'ébauche 10', une étape de suppression de matière illustrée Figure 8d permet de créer une deuxième gorge 80 dans l'ébauche.

Cette étape est par exemple réalisée par tournage ou par usinage. Les flèches de la Figure 8d illustrent la création d'une deuxième gorge 80 ouverte radialement vers l'axe X de la roue dentée.

A partir de l'ébauche 10' de la Figure 8c différentes variantes d'étape de suppression de matière de procédé de fabrication selon l'invention sont illustrées par des flèches sur les figures 8e à 8h.

Dans l'exemple de la Figure 8e, la deuxième gorge 80 ainsi créée dans l'ébauche est ouverte radialement vers la bande d'engrènement de la roue dentée.

Alternativement, l'étape illustrée sur la figure 8f correspond à la création dans le relief 33' de l'ébauche 10' de deux deuxièmes gorges 80, respectivement ouvertes radialement vers la bande d'engrènement de la roue dentée et vers l'axe X.

Les flèches de la figure 8g illustrent la suppression de matière dans le voile 3 par usinage pour obtenir la roue dentée des figures 8a et 8b. Dans cet exemple, la deuxième gorge 80 traverse le voile 3 et le relief 33. Le relief 33 est relié au voile au niveau de trois zones de liaison 330 de la roue dentée 10.

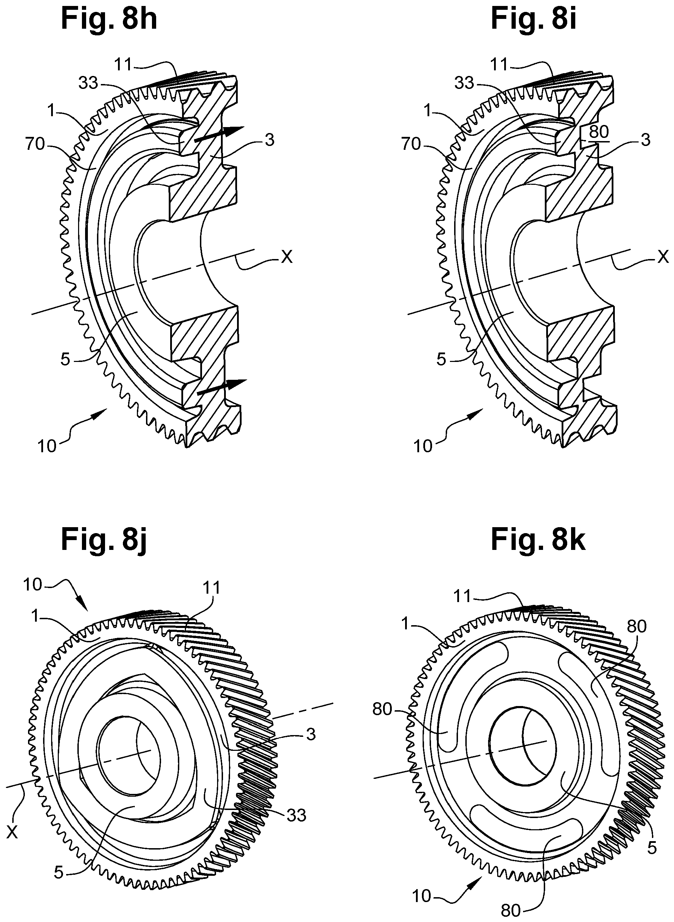

Dans une variante correspondant à une étape de suppression de matière illustrée Figure 8h, la roue dentée 10 obtenue comporte deux premières gorges 70, annulaires, circulaires et continues. Une des premières gorges 70 est située à une périphérie intérieure 13 de la bande d'engrènement 1, elle est délimitée par la bande d'engrènement 1 et le relief 33. L'autre première gorge 70 est située entre le relief 33 et le moyeu 5. La roue dentée 10 obtenue comporte également une deuxième gorge 80 annulaire et continue à l'intérieur du voile 3. La roue dentée 10 est illustrée en coupe isométrique à la Figure 8i.

La figure 8j montre une variante du troisième mode de réalisation d'une roue dentée 10. Dans cette variante le relief 33 présente une forme fermée formée de trois arcs de cercle 331 se coupant au niveau des trois zones de fixation 330. La roue dentée 10 comporte une première gorge 70 continue délimitée par la bande d'engrènement 1 et le relief 33. La roue dentée 10 comporte en outre une deuxième gorge 80 discontinue visible sur la figure 8k.

Dans une autre variante non illustrée, correspondant au deuxième mode de réalisation, le relief présente également une forme fermée comportant plusieurs parties en forme d'arc de cercle. Le relief est relié à une périphérie intérieure de la bande d'engrènement par des zones de liaison, en particulier en nombre impair. Les zones de liaison sont par exemple situées au milieu des portions en arcs de cercle. Dans différentes variantes les zones de liaison sont situées à l'intersection de deux parties en arc de cercle.

Dans les exemples précédents, la roue dentée comporte un seul relief présentant une forme annulaire fermée, le relief étant cylindrique ou non. Dans une variante non illustrée la roue dentée comporte un seul relief présentant une forme annulaire ouverte.

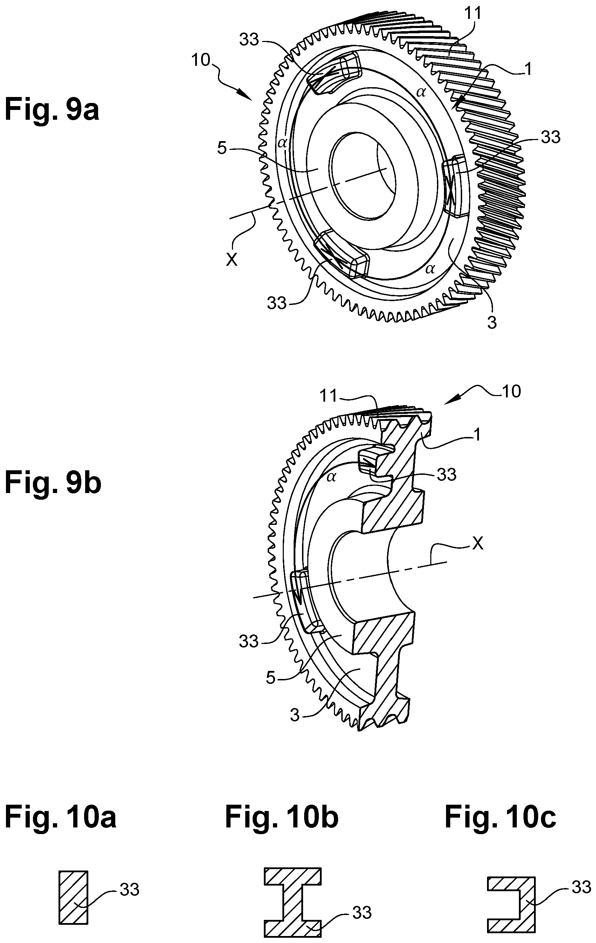

Les figures 9a et 9b illustrent une roue dentée 10 d'axe X qui comporte une bande d'engrènement 1 reliée par un voile 3 à un moyeu 5 et trois reliefs 33 s'étendant dans la direction de l'axe X de la roue dentée. Les reliefs 33 sont ici au nombre de 3 répartis régulièrement autour de l'axe X, autrement dit deux reliefs sont séparés par un angle α de 120°.

L'invention n'est pas limitée à un profil particulier du relief 33. En coupe radiale le relief 33 peut présenter une forme polygonale, rectangulaire, oblongue. Les figures 10a à 10c illustrent en coupe un profil en « i », en « h », en « u » selon différentes variantes de relief 33 d'une roue dentée 10.

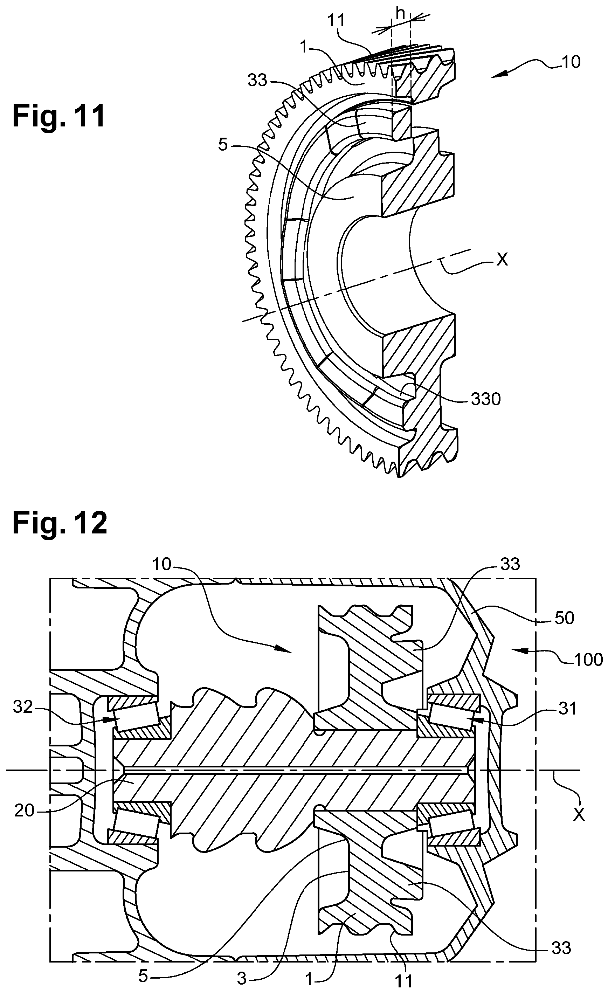

La Figure 11 illustre une roue dentée 10 comportant un relief 33 s'étendant autour de l'axe X et axialement d'une hauteur h. Le relief 33 présente ici une section transversale variable autour de l'axe X. La hauteur h selon l'axe X d'une section du relief 33 varie selon la position angulaire de ladite section par rapport à l'axe X.

L'ensemble d'engrenage 100 de la Figure 12 comporte une roue dentée 10 et un arbre 20, solidaires en rotation. La roue dentée 10 est ici emmanchée à force sur l'arbre 20. Selon un autre mode de réalisation non illustré, la roue dentée et l'arbre sont monoblocs. L'arbre 20 ici est supporté par un premier et un deuxième roulements 31 et 32. La roue dentée 10 comporte un relief 33 s'étendant autour de l'axe X ainsi que dans la direction de l'axe X. Le relief 33 est venu de matière avec le voile 3 et la bande d'engrènement 1.

L'exemple illustré montre également un carter 50 de l'ensemble d'engrenage.

Les caractéristiques, les variantes et les différentes formes de réalisation de l'invention peuvent être associées les unes avec les autres, selon diverses combinaisons, dans la mesure où elles ne sont pas incompatibles ou exclusives les unes des autres et où elles relèvent du champ de protection des revendications annexées.

Dans les exemples illustrés la denture est hélicoïdale, dans d'autres mises en œuvre de l'invention la denture est droite.

## Revendications

1. Roue dentée (10) d'axe (X), ladite roue dentée (10) comportant une bande d'engrènement (1), reliée par un voile (3) à un moyeu (5), **caractérisée en ce que** ladite roue dentée (10) comporte au moins un relief (33), s'étendant dans la direction de l'axe (X) et
ledit au moins un relief (33) étant fixé par soudure au voile (3) et/ou à la bande d'engrènement (1), la roue dentée (10) comportant plusieurs zones de fixation (333) entre l'au moins un relief (33) et le voile (3) ou entre l'au moins un relief (33) et la bande d'engrènement (1), la roue dentée (10) comportant un nombre impair de zones de fixation (333) entre l'au moins un relief (33) et le voile (3) ou entre l'au moins un relief (33) et la bande d'engrènement (1), ou
ledit au moins un relief (33) étant venu de matière avec le voile (3) et/ou la bande d'engrènement (1), la roue dentée (10) comportant plusieurs zones de liaison (330) entre l'au moins un relief (33) et le voile (3) ou entre l'au moins un relief (33) et la bande d'engrènement (1), la roue dentée (10) comportant un nombre impair de zones de liaison (330) entre l'au moins un relief (33) et le voile (3) ou entre l'au moins un relief (33) et la bande d'engrènement (1).

2. Roue dentée (10) selon la revendication précédente, dans laquelle les plusieurs zones de fixation (333) sont angulairement réparties de façon irrégulière autour de l'axe (X).

3. Roue dentée (10) selon la revendication 1, dans laquelle les plusieurs zones de liaison (330) sont angulairement réparties de façon irrégulière autour de l'axe (X).

4. Roue dentée (10) selon l'une des revendications 1 à 3, l'au moins un relief (33) étant fixé et/ou relié à un coté du voile (3).

5. Roue dentée (10) selon l'une des revendications précédentes, l'au moins un relief (33) présentant une forme annulaire, fermée ou non, d'axe (X),
la forme annulaire, étant notamment cylindrique.

6. Roue dentée (10) selon l'une des revendications précédentes, comportant plusieurs reliefs (33), notamment en nombre impair, par exemple angulairement répartis régulièrement autour de l'axe (X).

7. Roue dentée (10) selon l'une des revendications précédentes, comportant au moins une gorge (70,80) délimitée en partie par l'au moins un relief (33).

8. Roue dentée (10) selon l'une des revendications précédentes, l'au moins un relief (33) présentant en coupe un profil variable autour de l'axe (X).

9. Roue dentée (10) selon l'une des revendications précédentes, une section du au moins un relief (33) présentant une forme polygonale, rectangulaire, oblongue, en I, en H ou en U.

10. Ensemble d'engrenage comportant
- une roue dentée (10) selon l'une des revendications précédentes,
- et un arbre (20) solidaire en rotation avec la roue dentée (10).

11. Ensemble d'engrenage selon la revendication précédente, tel que la roue dentée (10) et l'arbre (20) sont monoblocs.

## Patentansprüche

1. Zahnrad (10) mit Achse (X), wobei das Zahnrad (10) ein Zahnband (1) umfasst, das durch einen Flansch (3) mit einer Nabe (5) verbunden ist, **dadurch gekennzeichnet, dass** das Zahnrad (10) mindestens eine Erhebung (33) umfasst, die sich in Richtung der Achse (X) erstreckt, und wobei die mindestens eine Erhebung (33) durch Schweißen am Flansch (3) und/oder am Zahnband (1) befestigt ist, wobei das Zahnrad (10) mehrere Befestigungszonen (333) zwischen der mindestens einen Erhebung (33) und dem Flansch (3) oder zwischen der mindestens einen Erhebung (33) und dem Zahnband (1) umfasst, wobei das Zahnrad (10) eine ungerade Anzahl von Befestigungszonen (333) zwischen der mindestens einen Erhebung (33) und dem Flansch (3) oder zwischen der mindestens einen Erhebung (33) und dem Zahnband (1) umfasst, oder wobei die mindestens eine Erhebung (33) aus Material mit dem Flansch (3) und/oder dem Zahnband (1) hergestellt ist, wobei das Zahnrad (10) mehrere Verbindungszonen (330) zwischen der mindestens einen Erhebung (33) und dem Flansch (3) oder zwischen der mindestens einen Erhebung (33) und dem Zahnband (1) umfasst, wobei das Zahnrad (10) eine ungerade Anzahl von Verbindungszonen (330) zwischen der mindestens einen Erhebung (33) und dem Flansch (3) oder zwischen der mindestens einen Erhebung (33) und dem Zahnband (1) umfasst.

2. Zahnrad (10) nach dem vorhergehenden Anspruch, bei dem die mehreren Befestigungszonen (333) winkelmäßig regelmäßig um die Achse (X) verteilt sind.

3. Zahnrad (10) nach Anspruch 1, bei dem die mehreren Verbindungszonen (330) winkelmäßig unregelmäßig um die Achse (X) verteilt sind.

4. Zahnrad (10) nach einem der Ansprüche 1 bis 3, wobei die mindestens eine Erhebung (33) an einer Seite des Flansches (3) befestigt und/oder verbunden ist.

5. Zahnrad (10) nach einem der vorhergehenden Ansprüche, wobei die mindestens eine Erhebung (33) eine ringförmige Form aufweist, geschlossen oder nicht, um die Achse (X), wobei die ringförmige Form insbesondere zylindrisch ist.

6. Zahnrad (10) nach einem der vorhergehenden Ansprüche, umfassend mehrere Erhebungen (33), insbesondere in ungerader Anzahl, beispielsweise winkelmäßig regelmäßig um die Achse (X) verteilt.

7. Zahnrad (10) nach einem der vorhergehenden Ansprüche, umfassend mindestens eine Nut (70,80), die teilweise durch die mindestens eine Erhebung (33) begrenzt wird.

8. Zahnrad (10) nach einem der vorhergehenden Ansprüche, wobei die mindestens eine Erhebung (33) im Querschnitt ein variables Profil um die Achse (X) aufweist.

9. Zahnrad (10) nach einem der vorhergehenden Ansprüche, wobei ein Abschnitt der mindestens einen Erhebung (33) eine polygonale, rechteckige, längliche, I-förmige, H-förmige oder U-förmige Form aufweist.

10. Getriebeanordnung, umfassend
- ein Zahnrad (10) nach einem der vorhergehenden Ansprüche,
- und eine Welle (20), die solidarisch mit dem Zahnrad (10) rotiert.

11. Getriebeanordnung nach dem vorhergehenden Anspruch, wobei das Zahnrad (10) und die Welle (20) einteilig ausgebildet sind.

## Claims

1. Gear wheel (10) with axis (X), said gear wheel (10) comprising a tooth band (1), connected by a flange (3) to a hub (5), **characterized in that** said gear wheel (10) comprises at least one relief (33), extending in the direction of the axis (X) and
said at least one relief (33) being fixed by welding to the flange (3) and/or to the tooth band (1), the gear wheel (10) comprising several fixing zones (333) between the at least one relief (33) and the flange (3) or between the at least one relief (33) and the tooth band (1), the gear wheel (10) comprising an odd number of fixing zones (333) between the at least one relief (33) and the flange (3) or between the at least one relief (33) and the tooth band (1), or
said at least one relief (33) being made of material with the flange (3) and/or the tooth band (1), the gear wheel (10) comprising several connection zones (330) between the at least one relief (33) and the flange (3) or between the at least one relief (33) and the tooth band (1), the gear wheel (10) comprising an odd number of connection zones (330) between the at least one relief (33) and the flange (3) or between the at least one relief (33) and the tooth band (1).

2. Gear wheel (10) according to the preceding claim, in which the several fixing zones (333) are angularly distributed in a regular manner around the axis (X).

3. Gear wheel (10) according to claim 1, in which the several connection zones (330) are angularly distributed in an irregular manner around the axis (X).

4. Gear wheel (10) according to any one of claims 1 to 3, the at least one relief (33) being fixed and/or connected to one side of the flange (3).

5. Gear wheel (10) according to any one of the preceding claims, the at least one relief (33) presenting an annular form, closed or not, around axis (X), the annular form being notably cylindrical.

6. Gear wheel (10) according to any one of the preceding claims, comprising several reliefs (33), notably in an odd number, for example angularly distributed regularly around the axis (X).

7. Gear wheel (10) according to any one of the preceding claims, comprising at least one groove (70, 80) delimited in part by the at least one relief (33).

8. Gear wheel (10) according to any one of the preceding claims, the at least one relief (33) presenting in cross-section a variable profile around the axis (X).

9. Gear wheel (10) according to any one of the preceding claims, a section of the at least one relief (33) presenting a polygonal, rectangular, oblong, I-shaped, H-shaped or U-shaped form.

10. Gear assembly comprising
- a gear wheel (10) according to any one of the preceding claims,
- and a shaft (20) rotating in solidarity with the gear wheel (10).

11. Gear assembly according to the preceding claim, such that the gear wheel (10) and the shaft (20) are monobloc.
